(19) **Europäisches Patentamt / European Patent Office / Office européen des brevets**

(11) **EP 3 274 642 B1**

(12) **FASCICULE DE BREVET EUROPEEN**

(45) Date de publication et mention
de la délivrance du brevet:
**17.04.2019 Bulletin 2019/16**

(21) Numéro de dépôt: **16714819.6**

(22) Date de dépôt: **25.03.2016**

(51) Int Cl.:
*F28D 20/02* (2006.01)   *F28F 1/32* (2006.01)
*F28D 20/00* (2006.01)   *F28D 1/02* (2006.01)

(86) Numéro de dépôt international:
**PCT/EP2016/056712**

(87) Numéro de publication internationale:
**WO 2016/156268 (06.10.2016 Gazette 2016/40)**

(54) **"DISPOSITIF DE STOCKAGE D'ÉNERGIE THERMIQUE MUNI D'UN ÉCHANGEUR À FLUIDE CALOPORTEUR ET À MCP ET SON PROCÉDÉ D'ASSEMBLAGE"**

VORRICHTUNG ZUR SPEICHERUNG VON WÄRMEENERGIE MIT EINEM WÄRMEÜBERTRAGUNGSFLUID- UND PCM-WÄRMETAUSCHER SOWIE MONTAGEVERFAHREN DAFÜR

DEVICE FOR STORING THERMAL ENERGY PROVIDED WITH AN EXCHANGER USING HEAT-TRANSFER FLUID AND PCM, AND METHOD FOR ASSEMBLING SAME

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **27.03.2015 FR 1552583**

(43) Date de publication de la demande:
**31.01.2018 Bulletin 2018/05**

(73) Titulaire: **Commissariat à l'Énergie Atomique et aux Énergies Alternatives 75015 Paris (FR)**

(72) Inventeurs:
• **MARTINELLI, Matthieu 38100 Grenoble (FR)**
• **COUTURIER, Raphaël 38360 Sassenage (FR)**

(74) Mandataire: **Brizio Delaporte, Allison Cabinet Hautier 20, rue de la Liberté 06000 Nice (FR)**

(56) Documents cités:
**WO-A1-2012/107757     DE-A1-102010 046 482
FR-A1- 2 370 236     US-A- 2 047 207**

EP 3 274 642 B1

Printed by Jouve, 75001 PARIS (FR)

**Description**

DOMAINE TECHNIQUE

La présente invention concerne un dispositif de stockage d'énergie thermique muni d'un échangeur à fluide caloporteur et à MCP selon le préambule de la revendication 1 et son procédé d'assemblage. DE 10 2010 046482 divulgue un tel dispositif.

Le domaine de l'invention concerne les Systèmes de Stockage Thermiques (SST) par Matériaux à Changement de Phase (MCP) ; et plus particulièrement, l'intégration d'un échangeur de chaleur à géométrie optimisée.

L'invention trouvera notamment son application dans les réseaux électriques et de chaleur urbains ou ruraux. L'invention pourra également trouver des applications dans le développement des réseaux « smartgrid » électriques et thermiques, ainsi que dans les interactions entre ces réseaux.

ETAT DE LA TECHNIQUE

Les réseaux de chaleur sont constitués d'au moins une source de chaleur (centrale thermique, panneaux solaires thermiques, source géothermique,...), d'un réseau de fluide permettant le transport des calories aux usagers par l'intermédiaire d'un fluide caloporteur et éventuellement d'un réseau de retour. Chaque poste de livraison de calories correspond en un échangeur de chaleur permettant le transfert thermique du circuit primaire (réseau relié à la source de chaleur) à un circuit secondaire ; ce second circuit est la propriété de l'abonné et est parcouru par de l'eau chaude (<100°C). Cet échangeur est le point de livraison de l'énergie thermique, on appelle l'ensemble échangeur, compteur, et les différents jeux de vannes : une sous-station.

La charge d'un réseau de chaleur est très fluctuante, en moyenne sur l'année les unités de production fonctionnent à 25% de leur capacité, en général, les pics de consommation sont 3 à 4 fois plus importants que la charge moyenne annuelle. Ces pics (matin, soir) représentent environ 30% de la consommation thermique d'une journée de chauffe typique. Les générateurs d'appoints (et de secours) sont généralement des centrales thermiques au fioul lourd, au gaz naturel ou au charbon, polluantes et pas toujours bon marché. L'utilisation d'un système de stockage thermique qui emmagasinerait des calories pendant que la demande est basse et les réinjecterait sur le réseau pendant les pics de consommations pourrait pallier ce problème.

Le stockage thermique peut être réalisé par stockage par enthalpie de changement d'état. Dans ce cas le stockage se fait par matériau à changement de phase. C'est l'enthalpie de changement de phase, le plus souvent lors du changement d'état solide/liquide, qui est stockée. Cette énergie, qui est par exemple absorbée lors de la fusion et libérée lors de la solidification, résulte de l'établissement, ou de la rupture, de liaisons interatomiques ou intermoléculaires. Couramment, la charge du système de stockage s'accompagne de la fusion du matériau de stockage, tandis que la décharge est réalisée par la solidification dudit matériau. Le matériau doit être judicieusement choisi en fonction de la température cible du système de stockage, afin que sa température de fusion soit dans la plage de température d'utilisation.

La quantité d'énergie thermique stockée s'exprime avec la relation suivante :

$$\Delta Q = m \cdot h\_lv$$

m Masse [kg]
h_lv Enthalpie massique de changement de phase solide-liquide [kJ/kg]

Un des avantages majeurs de cette technologie est que le changement de phase peut se faire à pression et température constantes. Par conséquent, la décharge de l'énergie stockée se fait à température constante.

L'enthalpie de changement de phase est relativement importante en comparaison de la variation d'énergie sensible d'un matériau. Par exemple, l'énergie stockée dans la fusion d'un bloc de paraffine (passage de 34 à 36°C pour la RT35HC de Rubitherm®) est équivalente à l'énergie stockée dans cette même quantité de paraffine si on la chauffe de 120°C.

Par conséquent, les systèmes de stockage avec un Matériau à Changement de Phase (MCP) sont intéressants car la quantité d'énergie stockée par unité de volume est supérieure à celle obtenue par un système sensible (meilleure densité de stockage). De ce fait les volumes de stockage et de matériaux sont réduits, ce qui diminue le prix du système, et limite les pertes thermiques qui sont proportionnelles à la surface extérieure du réservoir.

Le stockage thermique s'est récemment développé autour des centrales solaires thermodynamiques afin de pallier l'intermittence de la ressource solaire. Aujourd'hui, la thématique du stockage thermique concerne également l'habitat et les réseaux de chaleur.

On connait notamment la technologie d'échangeur tube - calandre. Une calandre dans laquelle circule un fluide est parcourue par un faisceau de tubes dans lesquels un autre fluide s'écoule. Les deux fluides échangent de l'énergie par conduction à travers l'épaisseur des tubes. Dans le cas du stockage thermique cette technologie est adaptée, il n'y a plus échange entre deux fluides en mouvement, mais entre un fluide caloporteur qui circule dans les tubes et un MCP qui est fixe dans la calandre (mis à part les mouvements de convection naturelle en phase liquide). Lors de la charge, le fluide caloporteur arrive à une température supérieure à la température de fusion du MCP et cède de l'énergie à celui-ci, ce qui entraine sa fusion ; lors de la décharge, le fluide caloporteur entre à une température inférieure à la température de fusion du MCP et récupère l'énergie précédemment stockée, ce qui entraine la solidification du MCP.

Classiquement, les tubes sont entourés d'ailettes circulaires augmentant la surface d'échange thermique ou bien d'inserts de plus grandes dimensions permettant en plus de maintenir les tubes solidaires entre eux.

Toutefois, dans ces systèmes tubes/calandres la conductivité reste faible du fait du MCP et des distances entre les tubes générant des zones mortes, c'est-à-dire des zones éloignées des ailettes. De plus, les contraintes mécaniques engendrées par l'expansion volumique du MCP lors de sa fusion peuvent être particulièrement fortes sur les ailettes; si la fusion du MCP commence en bas du réservoir et qu'une couche reste entièrement solide au-dessus du fait des zones mortes, la montée en pression de la poche liquide peut provoquer la déformation des ailettes, voire la rupture du réservoir. Avec les inserts, certains de ces inconvénients sont limités, cependant leur mise en oeuvre reste complexe en nécessitant un assemblage long et minutieux entrainant des coûts élevés.

Il existe donc le besoin de proposer un dispositif permettant des transferts thermiques conducteurs et convectifs améliorés tout en étant de conception aisée et peu coûteuse.

RÉSUMÉ DE L'INVENTION

La présente invention propose à cet effet un dispositif de stockage d'énergie thermique comprenant un échangeur thermique à fluide caloporteur et une enceinte remplie de MCP dans lequel est plongé l'échangeur. L'échangeur comprend des tubes et des plaques comprenant des ouvertures pour tubes au travers desquelles sont disposés les tubes. Selon l'invention, les plaques possèdent des reliefs faisant offices d'espaceurs de plaques permettant aux plaques d'être empilées les unes sur les autres en contact en maintenant entre deux plaques juxtaposées un espace.

L'invention permet grâce à la superposition des plaques en contact l'une de l'autre de maintenir l'empilement par leurs reliefs sans nécessiter de moyens de fixation additionnels des plaques sur les tubes. Chaque plaque repose sur une plaque inférieure par les reliefs. De plus, les reliefs augmentent la surface d'échange des plaques et améliorent ainsi les performances de transfert thermique.

Selon l'invention, les plaques sont ajourées de sorte à accommoder une déformation des plaques lors de l'expansion volumique du MCP. Préférentiellement, les plaques sont ajourées sans enlèvement de matière. Ceci permet encore d'augmenter la surface d'échange des plaques.

Préférentiellement, l'échangeur est noyé dans le MCP contenu dans l'enceinte, tandis qu'un fluide caloporteur circule dans les tubes.

Selon encore un autre aspect, l'invention concerne un procédé d'assemblage du dispositif tel que décrit ci-dessus comprenant l'empilement des plaques en contact en alignant les ouvertures pour tubes puis l'introduction des tubes dans les ouvertures pour tubes et le raccordement des tubes à un circuit fluidique de fluide caloporteur. Avantageusement, l'empilement est réalisé directement dans l'enceinte. L'assemblage est ainsi très rapide et facile.

BRÈVE DESCRIPTION DES FIGURES

Les buts, objets, ainsi que les caractéristiques et avantages de l'invention ressortiront mieux de la description détaillée d'un mode de réalisation de cette dernière qui est illustré par les figures d'accompagnement dans lesquelles :

Figure 1 : vue d'un échangeur tube/plaque de l'état de la technique.
Figure 2 : vue d'un dispositif selon un mode de réalisation de l'invention .
Figures 3 à 5 : vues de différents empilements de plaques de différentes géométries selon l'invention.
Figure 6 : vue d'une plaque ajourée sans enlèvement de matière selon l'invention. Les reliefs et les ouvertures pour tubes n'étant pas représentés.
Figures 7 à 10 : illustrent différentes géométries de reliefs des plaques selon l'invention.

Les dessins joints sont donnés à titre d'exemples et ne sont pas limitatifs de l'invention. Ils constituent des représentations schématiques de principe destinées à faciliter la compréhension de l'invention et ne sont pas nécessairement à l'échelle des applications pratiques.

DESCRIPTION DÉTAILLÉE DE L'INVENTION

Avant d'entamer une revue détaillée de modes de réalisation de l'invention, sont énoncées ci-après des caractéristiques optionnelles qui peuvent éventuellement être utilisées en association ou alternativement.

On rappelle tout d'abord que l'invention porte sur un dispositif de stockage d'énergie thermique comprenant un échangeur d'énergie thermique à fluide caloporteur et une enceinte remplie de matériau à changement de phase (MCP).

Les plaques sont ajourées. Avantageusement, les plaques sont ajourées sans enlèvement de matière.

Avantageusement, au moins un relief d'au moins une plaque comprend deux parois latérales en saillie relativement à un plan de plaque, de sorte à former une nervure s'étendant suivant la totalité d'une dimension de la plaque.

Avantageusement, moins une nervure est située dans une zone de la au moins une plaque hors de sa bordure.

Avantageusement, les reliefs sont des nervures.

Avantageusement, au moins une nervure est constituée par des plis de la au moins une plaque.

Avantageusement, les parois latérales sont réunies à leurs extrémités par une portion de liaison ayant une direction principale parallèle au plan de la plaque.

Avantageusement, au moins une plaque comporte au moins une nervure située au voisinage de chaque extrémité et au moins une nervure positionnée en zone centrale.

Avantageusement, au moins une plaque comporte au moins une nervure située au voisinage de chaque extrémité et au moins une nervure entre chaque tube.

Avantageusement, les parois latérales comportent une portion de liaison plane ou arrondies.

Avantageusement, les reliefs s'étendent d'un bord à l'autre d'une plaque.

Avantageusement, lequel les reliefs sont configurés pour générer une zone de contact plan avec une plaque adjacente.

Avantageusement, plusieurs plaques comportent des reliefs, les reliefs d'une première plaque comportant une hauteur donnée, les reliefs d'une deuxième plaque comportant une hauteur différente des reliefs de ladite première plaque.

Avantageusement, les plaques sont empilées les unes sur les autres avec des reliefs d'une plaque ayant une direction longitudinale parallèle à celles des reliefs d'au moins une plaque immédiatement adjacente.

Avantageusement, les plaques sont empilées les unes sur les autres avec des reliefs d'une plaque ayant une direction longitudinale perpendiculaire à celles des reliefs d'au moins une plaque immédiatement adjacente.

Avantageusement, l'empilement comprend des plaques (2) possédant au moins un relief et des plaques planes sans reliefs.

Avantageusement, au moins une plaque (2) est gaufrée découpée.

Avantageusement, au moins une plaque sont en métal déployé.

Avantageusement, les tubes et les plaques sont en continuité thermique via un matériau intermédiaire

Suivant un autre aspect l'invention concerne, un procédé d'assemblage d'un dispositif de stockage d'énergie tel que décrit ci-dessus comprenant les étapes successives suivantes avant ou après l'introduction de l'échangeur dans l'enceinte:

- empilement des plaques les unes sur les autres en alignant les ouvertures pour tubes,
- introduction des tubes dans les ouvertures pour tubes des plaques.

Avantageusement, le procédé comprend une étape ultérieure d'assemblage des tubes et des plaques par brasage ou galvanisation.

On entend par « au voisinage de chaque extrémité » les zones d'une plaque consistant en un tiers situé vers l'un des bords de la surface de ladite plaque formant les extrémités de ladite plaque.

On entend par « zone central » la zone d'une plaque consistant en un tiers médian de la surface de la plaque formant la zone centrale de ladite plaque.

L'échangeur 3 selon l'invention est un échangeur d'énergie thermique par fluide caloporteur. Le dispositif permet d'échanger de la chaleur. L'échangeur 3 comprend des tubes 1 et des plaques 2. Les plaques 2 comprennent des ouvertures 5 pour tubes au travers desquelles sont agencés les tubes 1. Les plaques 2 sont préférentiellement disposées perpendiculairement aux tubes 1. Préférentiellement, les tubes 1 sont parallèles entre-eux et les plaques 2 sont parallèles entre-elles.

L'échangeur 3 selon l'invention est particulièrement adapté à permettre l'échange de chaleur entre un fluide caloporteur et un matériau à changement de phase (MCP). L'échangeur 3 est avantageusement disposé dans une enceinte 10, l'ensemble formant un dispositif de stockage d'énergie thermique. L'enceinte 10 comprend le MCP dans lequel est noyé l'échangeur 3 selon l'invention. Un fluide caloporteur circule dans les tubes 1. Les tubes 1 sont reliés à un circuit fluidique de fluide caloporteur. Une première extrémité des tubes 1 constitue l'entrée du fluide caloporteur tandis que l'autre extrémité constitue la sortie du fluide caloporteur. La direction de circulation du fluide n'est pas unique, le fluide peut, selon que l'on est en charge ou en décharge, circuler dans une direction ou dans l'autre. Dans la description qui suit, le cas considéré est une charge. La description est faite pour un stockage de chaleur à température positive, il est à noter qu'elle est également valide pour le stockage de froid avec un MCP qui peut être alors de l'eau. Dans ce cas-là, les contraintes mécaniques sont plus fortes lors de la solidification de l'eau.

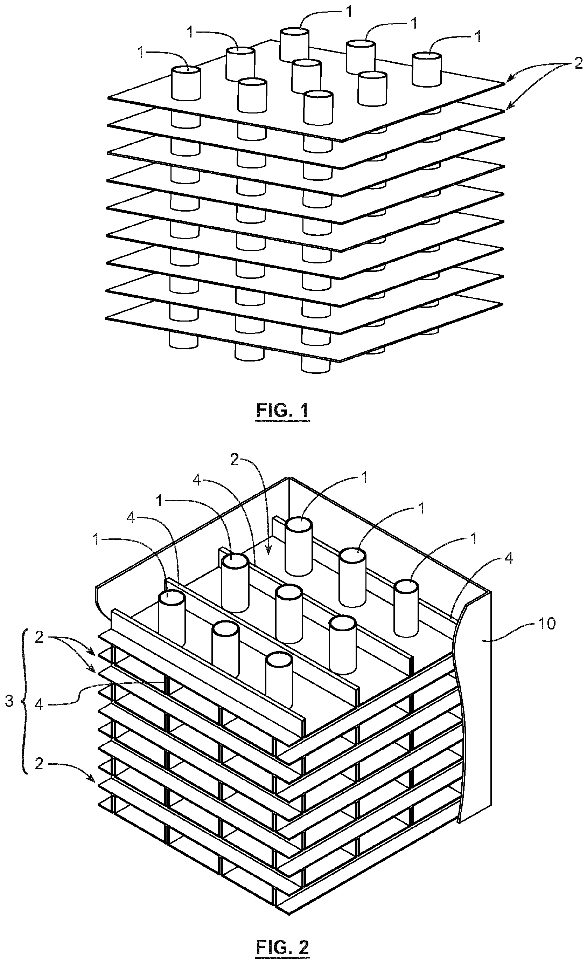

Sur la figure 1, illustrant l'état de la technique, les plaques 2 sont fixées aux tubes 1 de sorte à être maintenues superposées les unes au-dessus des autres. Il n'y a pas de contact direct entre les plaques 2. La conduction thermique verticale ne se fait qu'au travers des tubes 1. Ce type de dispositif est destiné à échanger l'énergie thermique entre un fluide circulant dans les tubes et de l'air circulant entre les plaques et les tubes.

De manière caractéristique selon l'invention illustrée en figure 2, les plaques 2 de l'échangeur 3 comprennent des reliefs permettant aux plaques 2 d'être superposées en contact les unes des autres. Les plaques 2 sont empilées et reposent les unes sur les autres par des zones de contact 7. Selon l'invention, il n'est pas nécessaire pour assurer la superposition des plaques 2 de prévoir des moyens de fixation des plaques 2 sur les tubes 1.

Les reliefs ont une fonction d'espaceurs des plaques 2. Les reliefs permettent de maintenir un espace entre deux plaques 2 juxtaposées. En effet, les plaques 2 sont espacées les unes des autres d'au moins la hau-

**EP 3 274 642 B1**

teur des reliefs d'une plaque 2.

Avantageusement, les plaques 2 comprennent une première face 8 et une deuxième face opposée 9, définies par rapport à la direction du fluide caloporteur circulant dans les tubes 1 ; face supérieure 8 du côté de l'entrée du fluide caloporteur dans les tubes 1 et une face inférieure 9 du côté de la sortie du fluide caloporteur dans les tubes 1. Les reliefs sont préférentiellement formés sur au moins l'une des deux faces 8-9 des plaques. On entend ainsi que les reliefs font saillies sur au moins l'une des deux faces 8, 9. Selon une possibilité, les reliefs font saillies sur les deux faces 8 et 9. Les plaques 2 comprennent des reliefs et avantageusement des portions planes 11 espaçant les reliefs.

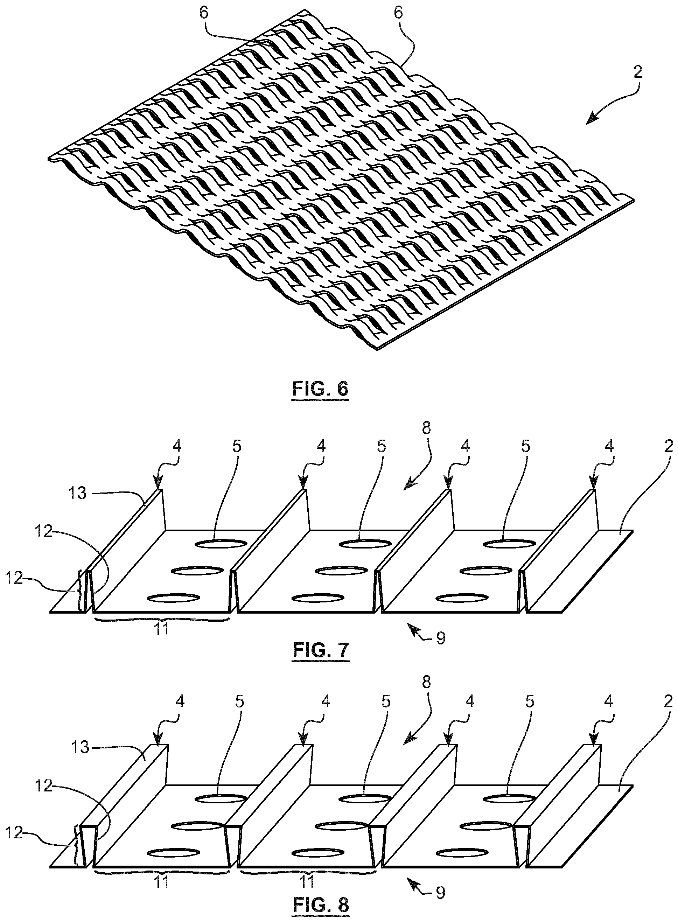

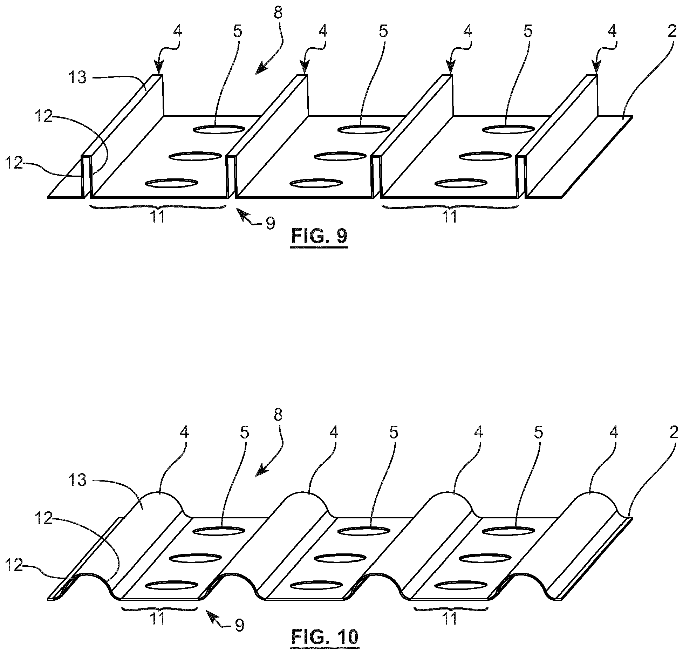

Les reliefs peuvent prendre des formes très variées telle que des saillies ponctuelles ou bien des reliefs longitudinaux s'étendant d'un bord à l'autre d'une plaque 2, en exemple préféré des nervures 4. Préférentiellement les nervures 4 s'étendent d'un côté à l'autre de la plaque 2. Les reliefs s'étendent suivant une direction principale perpendiculaire au plan de la face depuis laquelle ils s'étendent. Les reliefs peuvent être des nervures 4 formées par deux parois latérales 12 formant chacune un angle de 60° à 120° avec le plan de la face 8 ou 9 et réunies à leurs extrémités par une portion de liaison 13 ayant avantageusement une direction principale parallèle au plan de la face de la plaque 2. Les nervures 4 sont sensiblement de forme parallélépipédique telle qu'illustrées en figures 7 à 9. Selon une autre possibilité, les reliefs sont des nervures 4 de forme arrondie telle qu'illustrée en figure 10.

Préférentiellement, les reliefs sont configurés pour générés une zone de contact entre deux plaques juxtaposées. La zone de contact 7 est avantageusement une zone de contact plan, à titre d'exemple la portion de liaison de la nervure 4 décrite ci-dessus est en contact avec la face de la plaque 2 juxtaposée, plus précisément avec la portion plane 11 de la face.

Avantageusement, les reliefs sont formés par emboutissage de la plaque 2, ils peuvent également être obtenus par d'autres types d'usinages mécanique (modelage, matriçage, procédé Guérin, ou gravure pour les plus petits reliefs) ou laser. Préférentiellement, les reliefs sont formés par déformation de la plaque 2 et non pas par rajout de matière sur la plaque 2. Les reliefs et la plaque 2 sont solidaires. Les reliefs et la face 8 ou 9 de la plaque 2 forment une pièce monolithique afin d'optimiser les transferts thermiques.

La forme des reliefs doit être choisie pour assurer une fonction mécanique et une fonction thermique. Mécanique, car les reliefs permettent aux plaques 2 de reposer les unes sur les autres assurant ainsi leur espacement et avantageusement de maintenir la structure globale. En effet, en comparaison des tubes ailettés utilisés traditionnellement, les plaques 2 selon l'invention permettent de dissocier les tubes 1 et les plaques 2, autrement dit, les plaques sont indépendantes des tubes 1, notamment lors des étapes d'assemblage. Ce qui facilite grandement la mise en place. Il en résulte que le poids des plaques 2 ne repose pas sur les tubes 1. Thermique, car les reliefs augmentent la surface d'échange et améliorent les transferts thermiques dans la direction orthogonale aux plaques 2 : en effet, les plaques étant en contact les unes avec les autres selon la direction verticale, avantageusement par les zones de contact 7, elles favorisent les transferts thermiques conducteurs dans cette direction.

Par ailleurs, les plaques 2 s'étendent avantageusement sur toute la surface transversale de l'enceinte 10 par conséquent il n'y a pas de zones mortes, c'est-à-dire des zones éloignées des plaques 2, comme il peut en exister avec des tubes à ailettes de l'état de la technique au niveau des interstices entre les ailettes de différents tubes. On entend par surface transversale, la surface de l'enceinte 10 suivant une direction perpendiculaire à la direction longitudinale des tubes 1.

De plus, les nervures 4 donnent de la modularité au système, elles rajoutent de la latitude sur le design. En effet, alors que sur un tube ailetté de l'état de la technique, le pas d'ailettes est constant, il est possible ici, en modifiant la hauteur des nervures 4 d'avoir un échangeur 3 dont l'espacement entre les plaques 2 est adaptable, ce qui reviendrait à avoir un pas entre les ailettes variable. La puissance de l'installation va dépendre de la performance des ailettes, le recours à un pas variable permet de réaliser un design spécifique à une gamme de puissance désirée : en densifiant les nervures 4 en haut ou en bas, il est possible de relever le niveau de puissance en début ou fin de charge/décharge, ou à l'inverse de le diminuer.

A titre préféré, les reliefs ont une épaisseur minimum de 8mm et maximum de 10 cm, plus préférentiellement compris entre 2 et 5 cm. L'épaisseur des reliefs est à réajuster en fonction du nombre de tubes au mètre carré et à la puissance voulue.

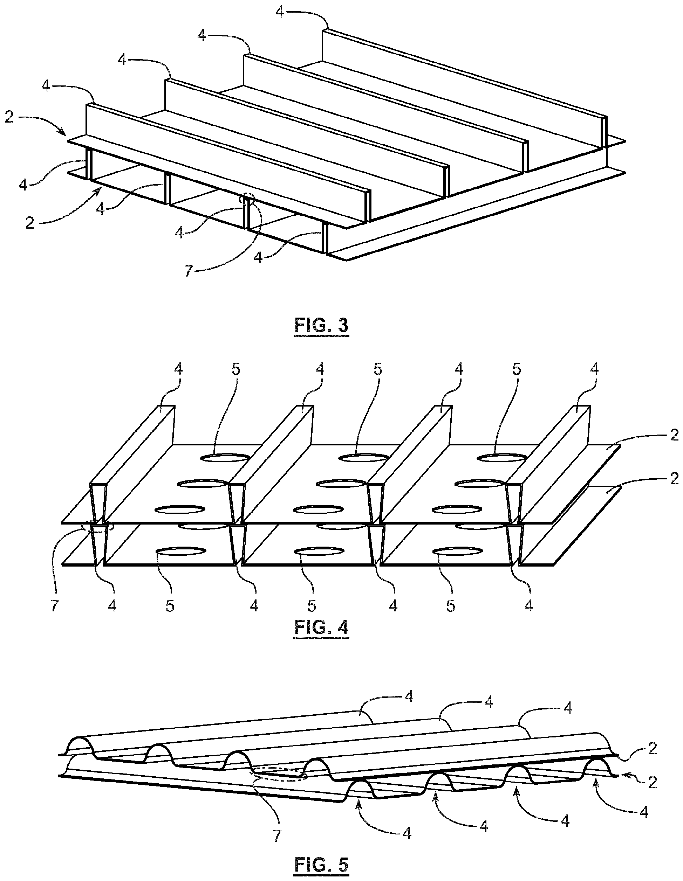

Des plaques 2 de différentes géométries peuvent être empilées dans un même échangeur 3. Les plaques 2 peuvent être empilées les unes sur les autres de différentes manières par exemple avec les nervures 4 d'une plaque 2 parallèles aux nervures des plaques 2 empilées de part et d'autre comme illustré en figure 4 ou bien avec des nervures 4 d'une plaque 2 perpendiculaires aux nervures 4 des autres plaques 2 empilées de part et d'autre comme illustré en figures 2, 3 et 5. Selon une possibilité non représentée, l'empilement comprend des plaques 2 possédant un relief et des plaques planes sans reliefs. Les plaques 2 possédant des reliefs, ont des reliefs s'étendant depuis les deux faces 8, 9 de la plaque 2. Ainsi l'empilement comprend successivement une plaque 2 à relief, puis une plaque plane puis une plaque 2 à relief... Avantageusement, les plaques 2 sont empilées par gravité.

A savoir, dans les dispositifs de stockage thermique par MCP, la puissance disponible est directement fonction de la surface d'échange et de l'agencement de l'échangeur dans l'enceinte. Ce qui permet d'optimiser la charge et la décharge du dispositif de stockage et d'adapter le système en fonction de son utilisation ; optimisant ainsi le rendement global de l'installation.

Les tubes 1 peuvent être de n'importe quelle section, avec une préférence marquée pour les tubes 1 à section circulaire qui sont les plus simples à concevoir et qui résistent le mieux à la pression. La disposition des tubes 1 peut également varier, ils peuvent être en carré, en triangle,...

Les tubes 1 peuvent être en acier, les nuances classiques pour une paroi sous pression sont P235GH, P265GH, P355GH ; en l'absence de pression, les aciers inoxydables 304, 316 peuvent être utilisés, en aluminium, en cuivre, ou en autre métal ou alliage. Avec une préférence pour l'acier ayant un faible coût, qui est solide et résistant à la pression et l'aluminium, facile à travailler, bon conducteur thermique.

Les plaques 2 peuvent être en n'importe quel métal, avec une préférence marquée pour l'acier, ayant un faible coût, et l'aluminium, léger et de très bonne conductivité thermique.

De manière générale, il faut que l'échangeur 3 soit solide et ait une bonne conductivité thermique et que le poids soit le moins important possible. En effet, les nervures 4 des plaques 2 inférieures supportent le poids de l'ensemble des plaques 2 situées au-dessus. Il est possible de renforcer les plaques 2 du fond en augmentant les nervures 4, par exemple avec plus de rigidité ou en les faisant plus épaisses. L'échangeur 3 est modulable, chaque plaque est un module.

Selon un mode de réalisation privilégié, les plaques 2 sont ajourées et préférentiellement sans enlèvement de matière. Les plaques 2 comprennent des perforations 6. Les plaques 2 sont perforées avantageusement sans enlèvement de matière telle qu'illustré à la figure 6.

Sur les figures 2 à 5 et 7 à 10, les perforations 6 ne sont pas illustrées pour simplifier les dessins.

Les plaques 2 sont préférentiellement gaufrées découpées (figure 6), ou même en métal déployé.

Les perforations 6 permettent le passage du MCP liquide : elles ne bloquent pas les transferts convectifs et préviennent les contraintes mécaniques engendrées par l'expansion volumique du MCP lors de son changement d'état, en permettant la mise en place de voies fluides. Préférentiellement, les perforations 6 se font sans enlèvement de matière afin d'optimiser les transferts thermiques en maximisant la surface d'échange de l'échangeur 3.

Les plaques 2 comprennent des ouvertures 5 pour tubes. Les ouvertures 5 sont réalisées avec enlèvement de matière préférentiellement par prédécoupage puis emboutissage. Les ouvertures 5 sont configurées pour recevoir les tubes 1. Chaque ouverture 5 reçoit un tube 1. L'ouverture 5 est de forme complémentaire à celle du tube 1 et avantageusement de dimensions légèrement supérieures.

Préférentiellement, les plaques 2 ont une forme correspondant à la forme de l'intérieur de l'enceinte 10. Les plaques 2 sont configurées pour être avantageusement empilées dans l'enceinte 10 du dispositif de stockage. A titre d'exemple, les plaques 2 sont de forme circulaire ou hexagonale.

Le dispositif comprend une enceinte 10 de stockage destinée à contenir au moins un MCP et un échangeur 3 tel que décrit ci-dessus dans lequel circule un fluide caloporteur traversant ladite enceinte 10.

L'enceinte 10 est classiquement d'une forme cylindrique dont les parois sont formées de matériau métallique résistant aux variations de pression et de température. A titre d'exemple, l'enceinte 10 est en acier de construction au carbone. Les nuances classiques pour une enceinte sous pression sont P235GH, P265GH, P355GH. En l'absence de pression, des aciers inoxydables 304, 316 peuvent être utilisés. L'enceinte peut être réalisée en une seule pièce, en deux demi-cylindres soudés, ou encore par superposition de viroles.

Le raccordement hydraulique peut se faire via une pieuvre, une plaque tubulaire, une boîte à eau, un divergent conique,...

Le MCP est placé directement dans l'enceinte 10 et l'échangeur 3 plonge dans ledit MCP. Le fluide caloporteur est classiquement de l'eau mais tout autre fluide présentant des propriétés caloporteuses peut être utilisé par exemple une huile thermique telle que le polychlorobiphényle (therminol®) ou un mélange d'isomères de (di)benzyltoluène (Jarytherm®)

Le dispositif peut comprendre une pluralité d'échangeurs 3 agencés dans une enceinte.

Le dispositif de stockage selon l'invention comprend selon une possibilité un dispositif de régulation de la température du fluide caloporteur. Le dispositif de régulation permet de contrôler la température du fluide caloporteur lors de l'utilisation du dispositif de stockage d'énergie pour apporter et extraire de la chaleur du MCP contenu dans l'enceinte.

Selon un mode de réalisation préféré, l'enceinte comprend des parois intérieures classiquement métalliques. Les parois sont préférentiellement recouvertes d'un matériau de revêtement destiné à éviter le contact entre le au moins un MCP et des parties métalliques. A titre d'exemple le matériau de revêtement est un polymère ou une résine, préférentiellement un matériau de type résine fluorée tel du PTFE, FEP ou PFA. Cette disposition améliore les capacités de stockage du MCP en limitant l'oxydation du MCP lors des cycles de stockage au contact de l'oxygène et/ou du métal. Avantageusement, cette disposition peut également être utile pour éviter la corrosion de l'enceinte par le MCP si celui-ci est corrosif.

L'enceinte 10 contient au moins un MCP. Il peut être utilisé des mélanges de MCP. Dans la suite de la description, la référence à un MCP n'est pas limitative. Différents MCP peuvent être utilisés notamment les MCP à transition solide/solide ou préférentiellement les MCP à transition solide/liquide. L'invention est adaptée à une vaste variété de MCP et donc à une large gamme de température de stockage. Les deux grandes catégories de MCP pouvant être utilisés sont les organiques (paraffine, acide gras, alcool,...) et les inorganiques (hydrates de sel, alliages métalliques,...). Pour les réseaux de chaleur à eau surchauffée (-180°C) le MCP utilisé aura une température de fusion de l'ordre de 100-120°C, par exemple : de l'érythritol, de l'acide sébacique, une paraffine,... Il est préféré de cibler un matériau qui ne s'oxyde pas et qui n'oxyde pas la structure métallique de l'échangeur 3 ou de l'enceinte, qui ait une bonne enthalpie massique de changement de phase et qui ne soit pas toxique. De préférence, le MCP aura une bonne capacité calorifique et une conductivité thermique la plus élevée possible.

Le MCP est un matériau à deux phases préférentiellement solide et liquide dont le passage entre ces deux phases stocke ou libère de l'énergie. Préférentiellement, le passage d'une première phase à une deuxième phase va nécessiter de la chaleur qui est donc stockée dans le MCP dans sa deuxième phase. A contrario, le passage de la deuxième phase à la première phase est exothermique et libère la chaleur stockée.

Lorsque le dispositif de stockage d'énergie fonctionne pour stocker de l'énergie thermique, l'échangeur 3 apporte de la chaleur dans l'enceinte, il y a un échange de chaleur du fluide caloporteur vers le MCP au travers de l'échangeur. Cette chaleur va permettre la transformation du MCP de la première phase à la deuxième phase qui stockera alors la chaleur issue du fluide caloporteur. Lorsque le dispositif fonctionne pour restituer de l'énergie thermique, l'échangeur 3 refroidit le MCP, il y a un échange de chaleur du MCP vers le fluide caloporteur au travers de l'échangeur 3, ce qui permet le passage de la deuxième phase à la première phase. Cette transformation est exothermique. La chaleur libérée est récupérée par le fluide caloporteur.

L'invention concerne également un procédé d'assemblage du dispositif de stockage d'énergie décrit ci-dessus. Le procédé comprend une étape d'empilement des plaques 2 les unes aux dessus des autres en contact en maintenant un espace entre deux plaques juxtaposées grâce aux reliefs. Les plaques 2 sont empilées de sorte que les ouvertures 5 pour tubes soient alignées. Préférentiellement, l'alignement des ouvertures 5 peut être réalisé à l'aide de guides de montage, qui sont préférentiellement des barres métalliques de même diamètre que les tubes 1. L'empilement se fait par gravité. Les plaques 2 reposent les unes sur les autres. Selon un mode de réalisation préféré, l'empilement est réalisé directement dans l'enceinte 10 du dispositif de stockage. Les tubes 1 sont ensuite introduits dans les ouvertures 5 pour tubes. Selon une possibilité, l'échangeur 3 ainsi formé peut être brasé ou galvanisé.

Pour le brasage, de la pâte à braser est déposée préalablement par colamination sur le contour des ouvertures 5 pour tubes préalablement à l'introduction des tubes 1 dans lesdites ouvertures 5. L'échangeur 3, c'est-à-dire les tubes 1 et plaques 2, est alors passé au four pour réaliser le brasage (580-620°C pour le brasage d'aluminium). Pour la galvanisation, l'échangeur 3, c'est-à-dire les tubes 1 et plaques 2, est galvanisé, par exemple, par trempage de l'échangeur 3 dans un bain de zinc en fusion, par exemple à une température de l'ordre de 450°C. L'échangeur 3 peut être galvanisé si l'ensemble est en acier, il est brasé sinon.

Cette étape est préférée, pour améliorer la continuité thermique entre les tubes 1 et les plaques 2.. Tout apport de matière permettant d'assurer la continuité thermique entre les tubes 1 et les plaques 2 est avantageux ? par exemple par pâte ou colle thermique. ladite matière apportée est préférentiellement compatible avec le MCP. Préférentiellement l'apport de matière est de type métallique et est réalisé par brasage ou galvanisation.

Une fois l'échangeur 3 avec les plaques 2 et les tubes 1 placé dans l'enceinte, les tubes 1 sont reliés au réseau fluidique du fluide caloporteur. Ensuite, l'enceinte 10 est remplie de MCP avantageusement à l'état liquide avant d'être fermée.

*Exemple : Mise en place d'un dispositif de stockage selon l'invention sur un réseau de chaleur urbain.*

Si l'on considère une ville de 150000 habitants, le réseau de chaleur, circuit primaire, est parcouru par de l'eau chaude surchauffée jusqu'à 180°C, 20bar.

Soit une sous-station moyenne :

- 75 logements desservis
- 750MWhth fournis sur l'année
- Saison de chauffe de 150 jours (en basse saison, seules les sous-stations assurant le chauffage de l'eau chaude sanitaire sont en service ; globalement le réseau fonctionne à moins de 10% de sa capacité totale)
- Sous-stations alimentées en eau surchauffée jusqu'à 180°C, 20bar

MW signifie Mégawatt ; MWh signifie Mégawatt heure ; $MWh_{thermique}$ signifie Mégawatt heure de source thermique ou d'énergie thermique déchargée ; $MWh_{électrique}$ signifie Mégawatt heure d'origine électrique.

Considérons donc une consommation approximative de $5MWh_{thermique}$/jr, dont $1.5MWh_{thermique}$ sont consommés pendant les pics de consommation : c'est l'énergie à stocker dans le MCP. La charge doit se faire sur environ 3h, soit une puissance désirée de $0.5MW_{thermique}$.

Le MCP sélectionné est l'érythritol :

- Température de fusion : 120°C
- Enthalpie massique de fusion: 340 kJ/kg
- Capacité thermique massique à pression constante
- Densité solide : 1480 kg/m3
- Densité liquide : 1300 kg/m3

Les dimensions totales d'un tel stockage sont de 2,3m de diamètre et de 3,0m de haut pour l'enceinte soit 2,9m et 3,3m isolation comprise. La fabrication industrielle de plaque 2 de 2,3m de diamètre ne pose pas de problème. Avec des plaques 2 d'un millimètre d'épaisseur et un pas entre les plaques 2 de l'ordre de deux centimètres selon l'axe vertical. Il faut environ 140 plaques 2, la masse par plaque 2 est d'environ 33kg en acier et 11kg en aluminium ; soit une structure d'environ 4.6 tonnes en acier et de 1.5t en aluminium, sans les tubes. Il faut compter environ 0.5t pour les tubes, au nombre d'une centaine, espacés d'environ 200mm. L'espace occupé par le l'échangeur 3 est ici, de l'ordre de 6-7% du volume intérieur de l'enceinte. Il y a donc 11m$^3$ de MCP (~14t) ; soit environ 1,3MWh d'énergie stockable via le changement de phase de la totalité du MCP.

REFERENCES

1.  Tube
2.  Plaque
3.  Echangeur
4.  Nervure
5.  Ouverture pour tube
6.  Perforation
7.  Zone de contact
8.  Surface supérieure
9.  Surface inférieure
10.  Enceinte
11.  Portion plane
12.  Paroi latérale
13.  Portion de liaison

**Revendications**

1.  Dispositif de stockage d'énergie thermique comprenant un échangeur (3) d'énergie thermique à fluide caloporteur et une enceinte (10) remplie de matériau à changement de phase (MCP) dans lequel est plongé ledit échangeur (3), des tubes (1), des plaques (2) comprenant des ouvertures (5) pour tubes au travers desquelles sont disposés les tubes (1), au moins certaines plaques (2) possédant des reliefs faisant offices d'espaceurs de plaques (2) permettant d'empiler les plaques (2) les unes sur les autres en contact en maintenant entre deux plaques (2) juxtaposées un espace **caractérisé en ce que** les plaques (2) sont ajourées.

2.  Dispositif selon la revendication précédente dans lequel les plaques (2) sont ajourées sans enlèvement de matière.

3.  Dispositif selon l'une quelconque des revendications précédentes dans lequel au moins un relief d'au moins une plaque (2) comprend deux parois latérales (12) en saillie relativement à un plan (8,9) de plaque, de sorte à former une nervure (4) s'étendant suivant la totalité d'une dimension de la plaque (2).

4.  Dispositif selon la revendication précédente dans lequel au moins une nervure (4) est située dans une zone de la au moins une plaque (2) hors de sa bordure.

5.  Dispositif selon l'une quelconque des deux revendications précédentes dans lequel au moins une nervure (4) est constituée par des plis de la au moins une plaque (2).

6.  Dispositif selon l'une quelconque des trois revendications précédentes dans lequel au moins une plaque (2) comporte au moins une nervure (4) située au voisinage de chaque extrémité et au moins une nervure positionnée en zone centrale.

7.  Dispositif selon l'une quelconque des quatre revendications précédentes dans lequel au moins une plaque (2) comporte au moins une nervure située au voisinage de chaque extrémité et au moins une nervure entre chaque tube.

8.  Dispositif selon l'une quelconque des revendications 3 à 7 dans lequel les parois latérales (12) sont réunies à leurs extrémités par une portion de liaison (13) ayant une direction principale parallèle au plan (8 ou 9) de la plaque (2) ou dans lequel ladite portion de liaison (13) est plane ou arrondie.

9.  Dispositif selon l'une quelconque des revendications précédentes dans lequel les reliefs d'au moins une plaque s'étendent d'un bord à l'autre de ladite plaque.

10.  Dispositif selon l'une quelconque des revendications précédentes dans lequel les reliefs d'au moins une plaque sont configurés pour générer une zone de contact plan (7) avec une plaque adjacente.

11.  Dispositif selon l'une quelconque des revendications précédentes dans lequel plusieurs plaques comportent des reliefs, les reliefs d'une première plaque comportant une hauteur donnée, les reliefs d'une deuxième plaque comportant une hauteur donnée différente des reliefs de ladite première plaque.

12.  Dispositif selon l'une quelconque des revendications précédentes dans lequel les plaques (2) sont empilées les unes sur les autres avec des reliefs d'une plaque (2) ayant une direction longitudinale parallèle à celle des reliefs d'au moins une plaque (2) immédiatement adjacente ou dans lequel les plaques sont empilées avec des reliefs d'une plaque (2) ayant une direction longitudinale perpendiculaires à celle des reliefs d'au moins une plaque (2) immédiatement adjacente.

13. Dispositif selon l'une quelconque des revendications précédentes dans lequel l'empilement comprend des plaques (2) possédant au moins un relief et des plaques planes sans reliefs.

14. Dispositif selon l'une quelconque des revendications précédentes dans lequel au moins une plaque (2) est gaufrée découpée et/ou en métal déployé.

15. Dispositif selon l'une quelconque des revendications précédentes dans lequel les tubes (1) et les plaques (2) sont en continuité thermique via un matériau intermédiaire.

16. Procédé d'assemblage d'un dispositif de stockage d'énergie selon l'une quelconque des revendications précédentes comprenant les étapes successives suivantes avant ou après l'introduction de l'échangeur (3) dans l'enceinte (10):

- empilement des plaques (2) les unes sur les autres en alignant les ouvertures (5) pour tubes,
- introduction des tubes (1) dans les ouvertures (5) pour tubes des plaques (2).

17. Procédé selon la revendication précédente comprenant une étape ultérieure d'assemblage des tubes (1) et des plaques (2) par brasage ou galvanisation.


**Patentansprüche**

1. Vorrichtung zum Speichern von Wärmeenergie, umfassend einen Wärmeträgerfluid-Wärmeenergietauscher (3) und einen Behälter (10), der mit Phasenwechselmaterial (PCM) gefüllt ist, in das der Tauscher (3) eingetaucht ist, Rohre (1), Platten (2), die Öffnungen (5) für Rohre umfassen, durch die hindurch die Rohre (1) angeordnet sind, wobei mindestens gewisse Platten (2) Erhebungen besitzen, sie als Plattenabstandshalter (2) fungieren, welche es ermöglichen, die Platten (2) in Kontakt übereinander unter Beibehaltung eines Abstands zwischen zwei übereinanderliegenden Platten (2) zu stapeln, **dadurch gekennzeichnet dass** die Platten (2) durchbrochen sind.

2. Vorrichtung nach dem vorstehenden Anspruch, wobei die Platten (2) ohne Materialabtrag durchbrochen sind.

3. Vorrichtung nach einem der vorstehenden Ansprüche, wobei mindestens eine Erhebung mindestens einer Platte (2) zwei Seitenwände (12) umfasst, die relativ zu einer Plattenebene (8, 9) vorspringen, sodass sie einen Steg (4) bilden, er sich entlang der Gesamtheit einer Abmessung der Platte (2) erstreckt.

4. Vorrichtung nach dem vorstehenden Anspruch, wobei mindestens ein Steg (4) in einem Bereich der mindestens einen Platte (2) außerhalb deren Randes liegt.

5. Vorrichtung nach einem der zwei vorstehenden Ansprüche, wobei mindestens ein Steg (4) aus Faltungen der mindestens einen Platte (2) besteht.

6. Vorrichtung nach einem der drei vorstehenden Ansprüche, wobei mindestens eine Platte (2) mindestens einen Steg (4) umfasst, der in der Nähe jedes Endes liegt, und mindestens einen Steg, der im mittleren Bereich positioniert ist.

7. Vorrichtung nach einem der vier vorstehenden Ansprüche, wobei mindestens eine Platte (2) mindestens einen Steg umfasst, der in der Nähe jedes Endes liegt, und mindestens einen Steg zwischen jedem Rohr.

8. Vorrichtung nach einem der Ansprüche 3 bis 7, wobei die Seitenwände (12) an ihren Enden über einen Verbindungsabschnitt (13) vereint sind, der eine zur Ebene (8 oder 9) der Platte (2) parallele Hauptrichtung aufweist, oder wobei der Verbindungsabschnitt (13) eben oder abgerundet ist.

9. Vorrichtung nach einem der vorstehenden Ansprüche, wobei sich die Erhebungen mindestens einer Platte von einer Kante der Platte zur anderen erstrecken.

10. Vorrichtung nach einem der vorstehenden Ansprüche, wobei die Erhebungen mindestens einer Platte dafür konfiguriert sind, einen ebenen Kontaktbereich (7) zu einer angrenzenden Platte zu erzeugen.

11. Vorrichtung nach einem der vorstehenden Ansprüche, wobei mehrere Platten Erhebungen umfassen, wobei die Erhebungen einer ersten Platte eine gegebene Höhe umfassen, wobei die Erhebungen einer zweiten Platte eine gegebene Höhe umfassen, die sich von den Erhebungen der ersten Platte unterscheidet.

12. Vorrichtung nach einem der vorstehenden Ansprüche, wobei die Platten (2) so übereinander gestapelt sind, dass Erhebungen einer Platte (2) eine Längsrichtung aufweisen, die zu derjenigen der Erhebungen mindestens einer unmittelbar angrenzenden Platte (2) parallel ist, oder wobei die Platten so gestapelt sind, dass Erhebungen einer Platte (2) eine Längsrichtung aufweisen, die zu derjenigen der Erhebungen mindestens einer unmittelbar angrenzenden Platte (2) senkrecht ist.

13. Vorrichtung nach einem der vorstehenden Ansprüche, wobei der Stapel Platten (2), die mindestens eine Erhebung besitzen, und ebene Platten ohne Erhebungen umfasst.

14. Vorrichtung nach einem der vorstehenden Ansprüche, wobei mindestens eine Platte (2) geprägt, zugeschnitten und/oder aus Streckmetall ist.

15. Vorrichtung nach einem der vorstehenden Ansprüche, wobei sich die Rohre (1) und die Platten (2) über ein Zwischenmaterial in Wärmekontinuität befinden.

16. Verfahren zum Zusammenfügen einer Energiespeichervorrichtung nach einem der vorstehenden Ansprüche, das die folgenden aufeinanderfolgenden Schritte vor oder nach dem Einbringen des Tauschers (3) in den Behälter (10) umfasst:

   - Stapeln der Platten (2) übereinander unter Ausrichten der Öffnungen (5) für Rohre,
   - Einbringen der Rohre (1) in die Öffnungen (5) für Rohre der Platten (2).

17. Verfahren nach dem vorstehenden Anspruch, das einen nachgelagerten Schritt des Zusammenfügens der Rohre (1) und der Platten (2) durch Löten oder Galvanisieren umfasst.

**Claims**

1. Thermal energy storage device comprising a heat-transfer fluid thermal energy exchanger (3) and an enclosure (10) filled with phase change material (PCM) wherein is immersed said exchanger (3), tubes (1), plates (2) comprising openings (5) for tubes through which are arranged the tubes (1), at least some plates (2) having reliefs acting as plate (2) spacers making it possible to stack the plates (2) in contact on top of one another by maintaining between two juxtaposed plates (2), a space **characterised in that** the plates (2) are perforated.

2. Device according to the preceding claim, wherein the plates (2) are perforated with no removal of material.

3. Device according to any one of the preceding claims, wherein at least one relief of at least one plate (2) comprises two side walls (12) protruding relative to a plate plane (8, 9), so as to form a groove (4) extending along the whole of a dimension of the plate (2).

4. Device according to the preceding claim, wherein at least one groove (4) is situated in a zone of the at least one plate (2) outside of the edge thereof.

5. Device according to any one of the two preceding claims, wherein at least one groove (4) is constituted by folds of the at least one plate (2).

6. Device according to any one of the three preceding claims, wherein at least one plate (2) comprises at least one groove (4) situated in the proximity of each end and at least one groove positioned in the central zone.

7. Device according to any one of the four preceding claims, wherein at least one plate (2) comprises at least one groove situated in the proximity of each end and at least one groove between each tube.

8. Device according to any one of claims 3 to 7, wherein the side walls (12) connect at the ends thereof by a connecting portion (13) having a main direction parallel to the plane (8 or 9) of the plate (2), or wherein said connecting portion (13) is flat or rounded.

9. Device according to any one of the preceding claims, wherein the reliefs of at least one plate extend from one edge to the other of said plate.

10. Device according to any one of the preceding claims, wherein the reliefs of at least one plate are configured to generate a flat contact zone (7) with an adjacent plate.

11. Device according to any one of the preceding claims, wherein several plates comprise reliefs, the reliefs of a first plate comprising a given height, the reliefs of a second plate comprising a different given height of the reliefs of said first plate.

12. Device according to any one of the preceding claims, wherein the plates (2) are stacked on top of one another with reliefs of a plate (2) having a longitudinal direction parallel to that of the reliefs of at least one immediately adjacent plate (2), or wherein the plates are stacked with the reliefs of a plate (2) having a longitudinal direction perpendicular to that of the reliefs of at least one immediately adjacent plate (2).

13. Device according to any one of the preceding claims, wherein the stack comprises plates (2) having at least one relief and flat plates without reliefs.

14. Device according to any one of the preceding claims, wherein at least one plate (2) is cut and embossed and/or made of expanded metal.

15. Device according to any one of the preceding claims, wherein the tubes (1) and the plates (2) are in thermal continuity via an intermediate material.

16. Method for assembling an energy storage device according to any one of the preceding claims comprising the following successive steps, before or after the introduction of the exchanger (3) in the enclosure (10):

　　- stacking of plates (2) on top of one another by aligning the openings (5) for tubes,
　　- introducing tubes (1) in the openings (5) for tubes of the plates (2).

17. Method according to the preceding claim, comprising a later step of assembling tubes (1) and plates (2) by soldering or galvanisation.

EP 3 274 642 B1

FIG. 1

FIG. 2

12

**FIG. 3**

**FIG. 4**

**FIG. 5**

**FIG. 6**

**FIG. 7**

**FIG. 8**

FIG. 9

FIG. 10

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- DE 102010046482